**Europäisches Patentamt**

**European Patent Office**

**Office européen des brevets**

(19)

(11) Publication number: **0 068 852**
A2

(12) # EUROPEAN PATENT APPLICATION

(21) Application number: **82303344.4**

(51) Int. Cl.³: **G 01 S 7/10**, G 01 S 7/44

(22) Date of filing: **25.06.82**

(30) Priority: **25.06.81 NO 812173**

(71) Applicant: **A/S Kongsberg Väpenfabrikk, Kirkegardsveien, N-3600 Kongsberg (NO)**

(72) Inventor: **Fossan, Magne, Jan Ekensvei 13, N-3155 Asgardsstrand (NO)**
Inventor: **Pohner, Freddy, Lokkeveien, N-3155 Asgardsstrand (NO)**
Inventor: **Abelsen, Ole Johan, Pieksgt. 2A, N-3191 Horten (NO)**
Inventor: **Torkilseng, Tor Arne, Torsvei 9A, N-3155 Asgardsstrand (NO)**

(43) Date of publication of application: **05.01.83**
**Bulletin 83/1**

(84) Designated Contracting States: **BE FR GB IT NL SE**

(74) Representative: **Jackson, David Spence et al, REDDIE & GROSE 16, Theobalds Road, London, WC1X 8PL (GB)**

(54) **A method and an apparatus for treating range and direction information data.**

(57) Analog video information from a radar antenna rotating once each 2 seconds and emitting 2000 pulses per second is digitized by an A/D converter (15) which feeds a sweep memory (16) comprising 1024 range cells each storing one pixel. The analog antenna bearing Ø is digitized by a synchro/digital converter (19) and its sine and cosine fetched from a ROM table and supplied to X and Y rate multipliers (18) whose other input is a constant frequency. The pixels in the sweep memory (16) are written to X and Y coordinate addresses, determined from their range and bearing coordinates by the rate multipliers, in an intermediate storage block memory (17). Of the 4.096.000 pixels per antenna rotation, a central processor unit (20), operating in accordance with an algorithm, writes only 1048576 final pixels, four at a time, to a radar display refresh memory (3, 21) from which these pixels, in cartesian coordinate format, are transferred in page mode through a line buffer (30) to a D/A video output unit (5) and thence to a monitor (4) which provides a raster scan display of 1024 x 1024 pixels corresponding to the PPI information produced by the antenna. In controlling the transfer of pixels from the block memory (17) to the radar display refresh memory (3, 21), the central processor unit (20) forms and uses a table of memory block addresses associated with 4096 possible antenna bearing values, each memory block occurring once only in the table.

## A method and an apparatus for treating
## range and direction information data

The present invention relates to a method for treating range and direction information data, and more specifically to the conversion of such data from a first scan format to a different scan format, so as to enable a more convenient display to be provided. Such conversion may be of a topographic picture related to a radar sensor and have a scan format in polar coordinates, the polar coordinates after conversion being transformed to cartesian coordinates which are displayed on a high resolution raster scan monitor having an appropriate refresh rate. The invention also relates to the transfer of the converted data from a display memory to the raster scan monitor.

Further the invention also relates to an apparatus for carrying out the method.

Although the present invention will be described in connection with the conversion of radar pictures from a radar sensor related polar coordinate format to pictures of identical content, but having a cartesian coordinate format, it is to be understood that the invention will also be applicable to systems which are not necessarily associated with radar pictures and the further treatment of such converted data for the display thereof on a monitor.

The tracing of a radar plan position picture is generally carried out on a plan position indicator (PPI) by means of a sequence of radial display sweeps rotating in syncronism with one or more radar antennas. The echoes or target signals will then appear as long persistence phosphor markings, the decaying afterglow thereof serving as a memory function.

Several different techniques for converting such a PPI picture to one of higher and steadier brightness have been

-2-

suggested already.

In an article written by J. Gietema in Phillips Telecommunication Review, Vol. 37 No. 2, May 1979 "A digital scan converter for radar pictures", the replacement is suggested of the memory function of the phosphor, bilateral target or TV camera by that of a solid-state random access memory. In the same article it is stated that if it is possible to make the input and output speeds of such a memory high enough it is possible to arrive at a solid-state digital scan converter, which excels in resolution, accuracy, stability and MTBF, whilst offering such latitude in the admixture of synthetics and facilitating control over, and processing of, the entire picture content.

In the above article it is suggested that the converting medium should be constituted by a dynamic MOS memory with 16k modules, the memory being built up from 1024x1024 topography-related storage cells each having a capacity of 5 bits. This gives a total capacity of approximately 5 Mb, which is comparable to a computer memory capacity of 320kx16-bit words.

However, although the article suggests a converting medium comparable to a computer it is to be noted that no computer can straight away handle the indicated number of data items at sufficiently high speed, i.e. a speed which has to be adapted to the scanning velocity of the radar beam.

In British Patent Specification 1.529.281 there is described a possible way of overcoming the problems of writing into a display memory and refreshing a CRT monitor with data from the display memory within the available time by applying a technique whereby a sweep data buffer and the display memory are both segmented into several parts, and the scan conversion and writing into the display memory is performed simultaneously for each segment of the sweep data buffer.

An object of the present invention is to solve the time problems discussed above in a different manner which will be described in principle below as compared with the prior art technique. In the prior art technique, a radar sweep buffer contains digital radar data from one radial sweep appropriately stored in $n_1$ storage elements, each holding $m_1$ bits of amplitude information. The radar data is fed into the sweep buffer by sampling the radar video signal at a suitable sampling rate, and at each sampling time converting the video signal to digital form by use of an A/D converter with $m_1$ bits, the digitized radar video signals being stored and sampled in consecutive locations in the sweep buffer.

The radar is operating at k pulses per second, and the scanner rotates one revolution in $T_{rot}$ seconds.

The radar data held in the sweep buffer is converted from polar to cartesian coordinates by applying two rate multipliers to increment x and y address registers from a defined starting value, values of sine and cosine representing the radar scanner bearing and a clock signal being the input signals to the rate multipliers. The radar data is stored in one pixel at a time.

The display memory which is connected to the above de- scribed coordinate converter, consists of N by N memory locations, each hold $m_2$ bits of amplitude information. The contents of the display memory is read regularly, line by line and transferred to refresh a CRT display monitor with N active picture lines. The display picture is refreshed j times per second. During refresh reading, n pixels are read simultaneously on the same clock cycle.

If the display memory has a cycle time of $q_1$ nanosec. for writing and $q_2$ nanosec. for reading, the above known configuration comprising the radar sweep buffer, the coordinate converter and the display memory will have the following time budget for the display memory:

Number of read accesses to refresh one display picture:

$$na = \frac{N^2}{n}$$

Percent of time occupied for display refresh:

$$r_p = 100 \cdot na \cdot q_2 \cdot 10^{-9} \cdot j$$

Number of write accesses for one radar sweep: $n_1$

Percent of time occupied for writing:
$$r_w^a = 100 \cdot n_1 \cdot q_1 \cdot 10^{-9} \cdot k$$

Assume as a calculation example that
$N = 1024$, $n = 64$, $q_1 = q_2 = 500$, $n_1 = 1024$, $k = 2000$,
$j = 60$

This gives na = 16384, and
$r_p = 49,15\%$

The time consumed for writing is
$r_w^a = 102,4\%$

Since the sum of $r_p$ and $r_w^a$ exceeds 100% (approx. 150%),
this design will not function with the selected numerical
values, which are quite relevant.

If according to the present invention the scan converted
data is first written in an intermediate storage unit
when being released from the coordinate converter
and later read to a refresh display memory by a data bus,
in which the transfer of data takes place with a plurality
of pixels in parallel, i.e. z pixels at the same time,
the following two advantages are achieved:

1. The number of write accesses is reduced because
of a larger number of pixels per write access to the refresh
memory.

2. The number of write accesses to the refresh memory is reduced because it is possible to design an arrangement such that each pixel in the refresh memory is updated only once per antenna revolution.

The second advantage arises from the invention as follows:

During one complete rotation of the antenna or other sensor, a certain number, say 4096000, of pixels are produced. However, the angle through which the antenna turns between one pulse and the next is so small that some elementary areas corresponding to respective pixels, are irradiated several times during one complete rotation of the antenna. All the pixels produced by the antenna are written to the intermediate storage unit, but only the last pixel data which appears after the radar beam or equivalent sensor vector has passed the corresponding elementary areas scanned is transferred to the refresh memory. The passing of scanned areas by the beam or other vector is monitored by an algorithm. For example, there are 4096000 writing accesses to the intermediate storage unit, but with a refresh memory capacity of 1024 x 1024 pixels, only 1048576 "final" pixels are transferred from the intermediate storage unit to the refresh memory. No updating of the same pixel is effected in the refresh memory, and the number 1048576 corresponds in this example to the number of pixels appearing on the raster scan display.

For the same type of display memory, the display refresh time remains constant. The number of write to refresh memory cycles per second is now

$$n_b = \frac{1}{T_{rot}} \cdot \frac{N^2}{z}$$

and the percent of time occupied for writing

$$r_w^b = 100 \cdot n_b \cdot q_1 \cdot 10^{-9}$$

For the same calculation example,
with $z = 4$ and $T_{rot} = 2$ sec,

$$n_b = 131072$$

$$r_w^b = 6,55\%$$

The total time consumption for the refresh memory is now

$$r_m = r_p + r_w^b = 55,7\%$$

which is far from critical.

The time budget for the intermediate storage unit is:

$$r_{buf} = r_w^a + r_w^b$$

It will be seen that with the same numerical values as in the prior art example a slight speed increase is necessary to make the design function, i.e. to make $r_{buf} < 100\%$.

The intermediate storage unit can be of the same size as the display memory. However, in the case of expensive memory components it can be reduced in size by having only enough capacity to allow for
buffering of the area on the display where the
information content is changing, i.e. in the direction
corresponding to the radar sweep.

This can be accomplished by segmenting the refresh
memory into $N_1 \cdot N_1$ blocks of locations each block then
containing $U \cdot U$ pixels,
where $\quad U = \dfrac{N}{N_1}$

It can be demonstrated geometrically that the
number of such blocks addressed by the radar sweep at any
bearing will be upwardly limited to $2 \cdot N_1$ blocks.

The minimum capacity requirements for the intermediate
storage unit is $2 \cdot N_1$ blocks plus at least $N_1$ blocks
to allow reasonable time for data transfer to the
refresh memory.

In summary, the present invention relates to a
method of treating range and direction information data
which is converted from a first scan format to a different
scan format and is displayed on a raster scan display,
wherein the range and direction information data provided
by a range and direction sensor is stored in an input
buffer as quantized video signals at addresses corresponding
to the first format according to which the field of
view determined by the sensor in azimuth and range
coordinates is scanned at a given first rate, and addresses
are generated as a function of the scan pattern and
the scanning rate to accommodate the data read from the
input buffer in a memory unit at locations corresponding
to the display line pattern to be realized on the raster
scan display, the data stored in the memory unit being
transferred to a video output unit under the control
of a timing unit in order to be presented on the raster
scan display at a given second rate, and the invention
is characterized in that the storing of the data having
converted addresses takes place in an intermediate storage unit consisting of a number of square memory blocks
each corresponding to a plurality of pixels, that the intermediately stored data in the said blocks is transferred
to a display memory, which comprises at least a sensor
information refresh memory, after a writing sweep has
passed respective memory blocks, and that in the said
transfer of data to the display memory a plurality of pixels
are transferred in parallel.

Depending on the number of square memory blocks
in the intermediate storage unit the filling and emptying of
the blocks can be carried out in several different ways.

The number of blocks in the intermediate storage unit
does not have to be larger than that required when a
writing sweep beam is made to sweep across a storage
region representing the scanning area so as to
simultaneously cover said number of blocks and a number
of pixels associated therewith and the pixels which
are thus covered by the writing sweep beam are filled with
data representing raw range and direction video information, since the blocks can be arranged to displaceably
overlap the writing sweep beam through its scanning
operation so that those blocks which are in the process
of being filled are held stationary relative to the
writing sweep beam whereas the blocks which have been
"passed" by the writing sweep beam are emptied and displaced
to a position ahead of the writing sweep beam so as to
maintain the overlapping thereof.

Alternatively the number of blocks can be large
enough to cover all writing positions of the writing
sweep beam, in which case the dynamic overlapping of the
writing sweep beam can be reduced to very few blocks or be
completely eliminated.

The preferred implementation of the conversion from
polar coordinates to cartesian coordinates is based on
the sensor direction and range vector value being
represented by a constant frequency and its X and Y
components being generated as fractions of this frequency,
the fractions representing the corresponding sine and cosine values respectively, which are found in a read-only-memory table. Rate multipliers can be used to generate the X and Y components. In the preferred implementation the three frequencies are supplied to respective counters, the vector counter pointing to addresses in a sweep memory whereas the X-counter and Y-counter point to addresses in a block pointer memory and a block memory of the intermediate storage unit. The writing sweep is established in operation by the sweep memory, the X and Y counters, and the block pointer memory. After the converted data has been stored in the block memory it is transferred to the display memory in such a manner that the cartesian coordinates which have now been associated with the information, constitute the address at which the converted data is stored in the sensor information refresh memory of the display memory.

In order to speed up the transfer of data from the display memory to the display, sensor information data representing a picture line of the raster scan display of a monitor on which this data is to be displayed is transferred to a line buffer during the line flyback period of the monitor. The picture line data is then ready to be transferred to the monitor during the total active horizontal line time and the pixels for the actual line are then shifted from the line buffer to the monitor, the sensor information refresh memory during this horizontal line being enabled for external input of fresh data which is to be displayed on the monitor.

Although the line flyback time is relatively short compared to the total active horizontal line time, the transfer of a set of picture line data from a refresh memory to a line buffer will not constitute a problem since the amount of data representing only one picture line is relatively small. The transfer of the line data from the line buffer to the monitor takes place during the horizontal line time which is much longer than the line flyback time. The horizontal line time is also utilized for updating the refresh memory with fresh
converted video data from the block memory of the
intermediate storage unit.

To further speed up the transfer of data from
the refresh memory to the line buffer the data is
transferred in groups, each group being selected so as
to have the same row address.  Thereby the access time to
each address location is reduced by reading in page
mode and the retrieval and transfer time is speeded up
so as to cope with the. line flyback period of the monitor.

In the following the invention will be further
described with reference to the drawings which illustrate
the general principle of the invention and functional
details related thereto.

Fig 1 is a block diagram of a scan converter and
synthetic display system.

Fig. 2 is a simplified block diagram of a radar
information processing and display system.

Fig 3 is a block diagram illustrating the basic
principle of coordinate conversion used in the systems
of figures 1 and 2.

Fig. 4 illustrates the principle of arrangement
of a radar display memory of the system of figures 1 to
3.

Fig. 5 illustrates a block memory arrangement of the
system of figures  1 to 3.

Fig 6 illustrates a sweep memory arrangement of
the system of figures 1 to 3.

Fig 7 is a diagram illustrating the relationship
between polar coordinates and cartesian coordinates
employed in the system of figures 1 to 3.

Fig 8 is a simplified block diagram illustrating
the generation of cartesian coordinates by rate multipliers in the system of figures 1 to 3.

Fig 9 is a block diagram illustrating the interconnection between vector counter, X-counter, Y-counter
and the sweep memory and block memory in the system of
figures 1 to 3.

0068852

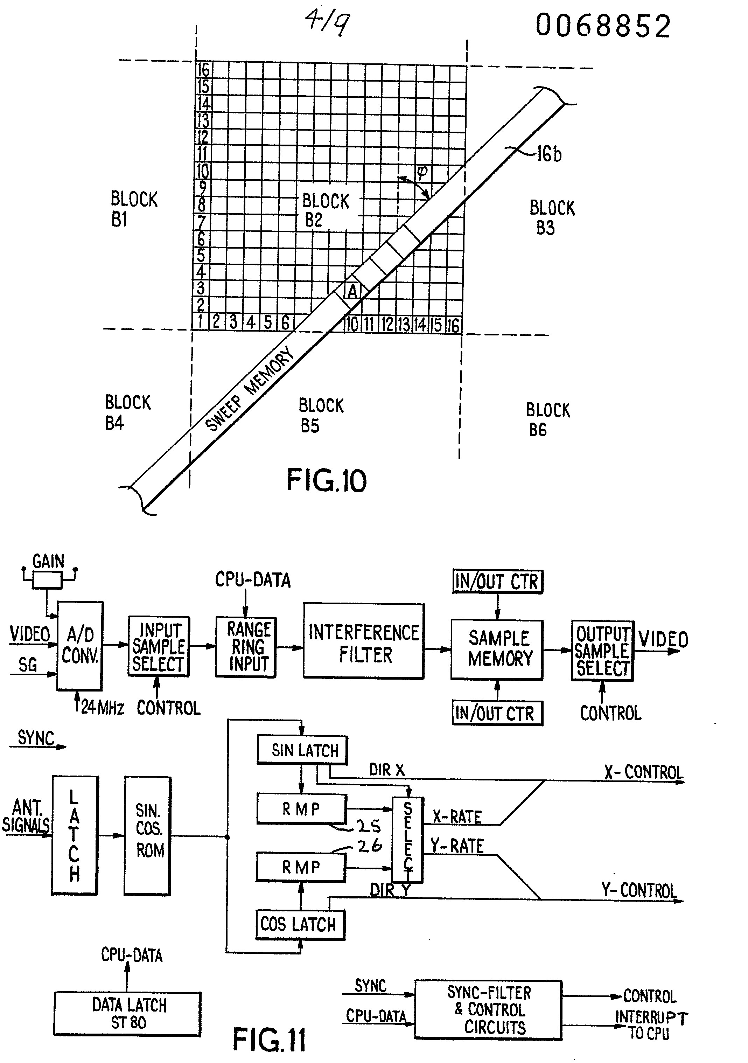

Fig.10 is a diagram illustrating the relation between the sweep memory and the block memory of figure 9.

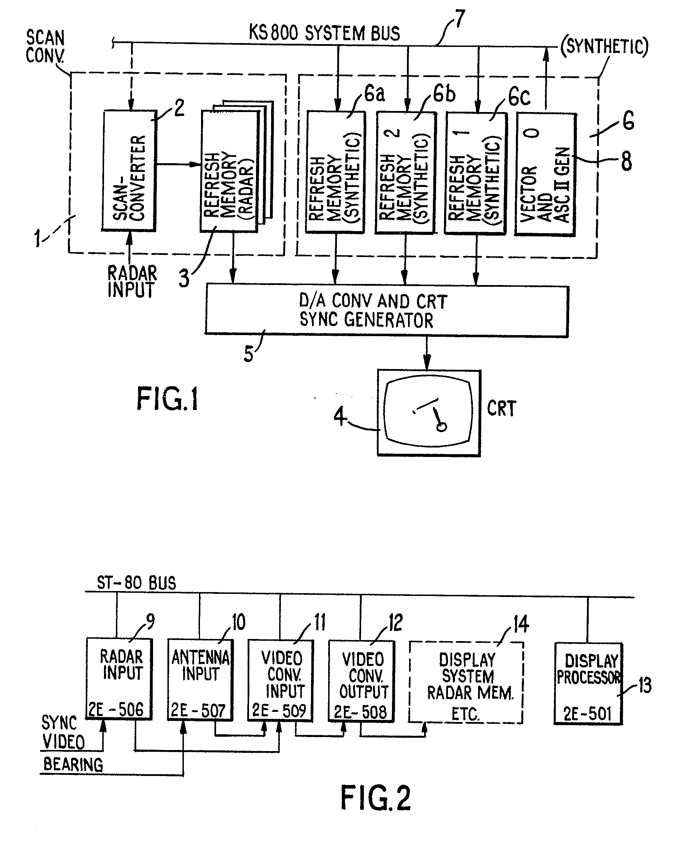

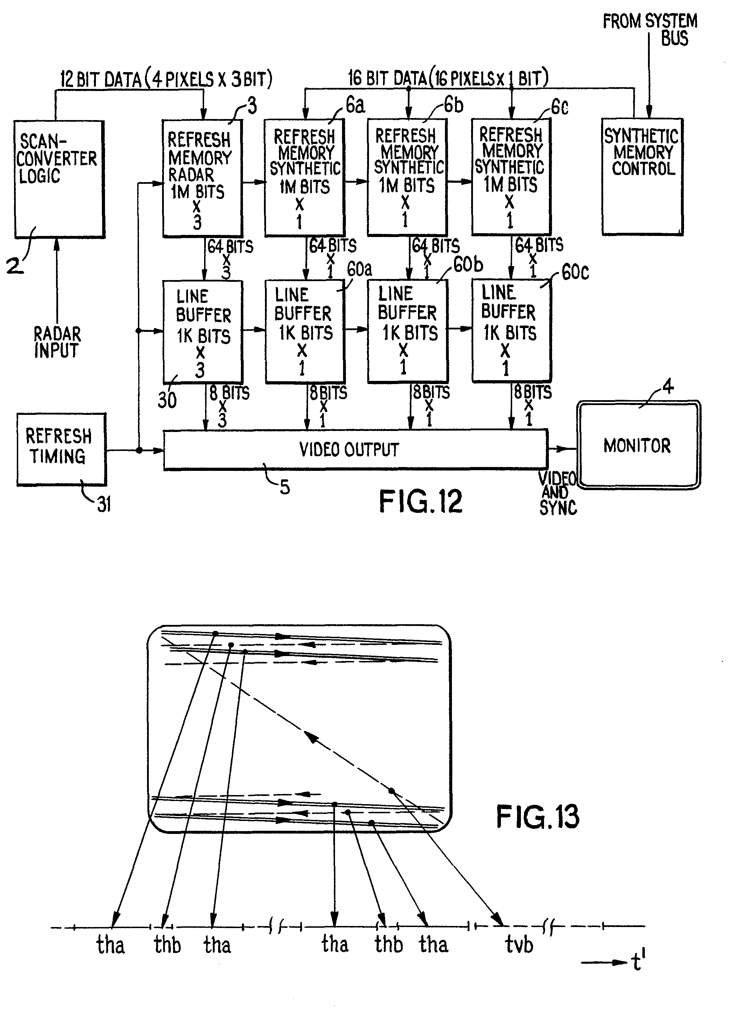

Fig. 11 is a more detailed block diagram of part of figure 2.

Fig. 12. is a more detailed block diagram illustrating the data flow from the scan converter through the radar display refresh memory of the radar display memory to a video monitor in the systems of figures 1 to 3.

Fig. 13 is a diagram illustrating monitor timing in the system of figures 1 to 3.

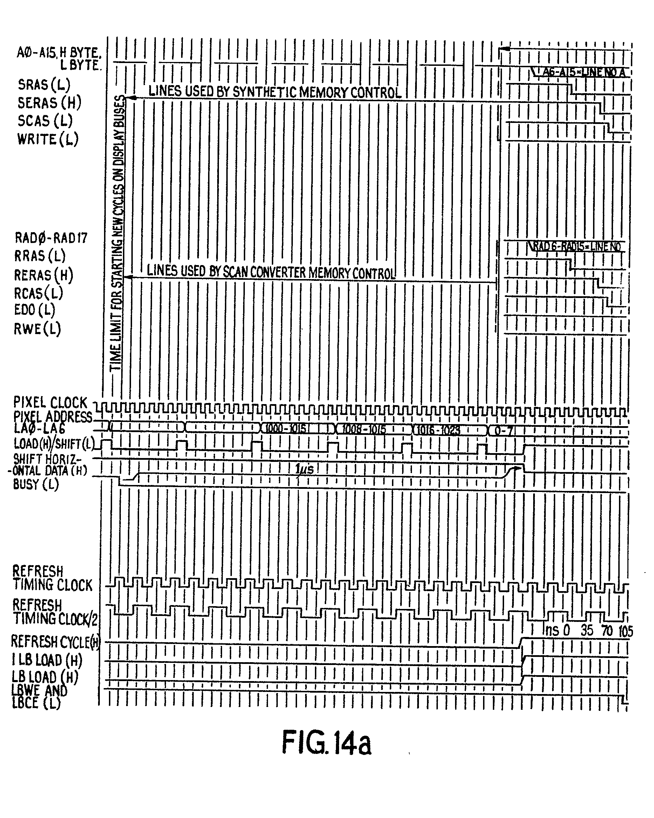

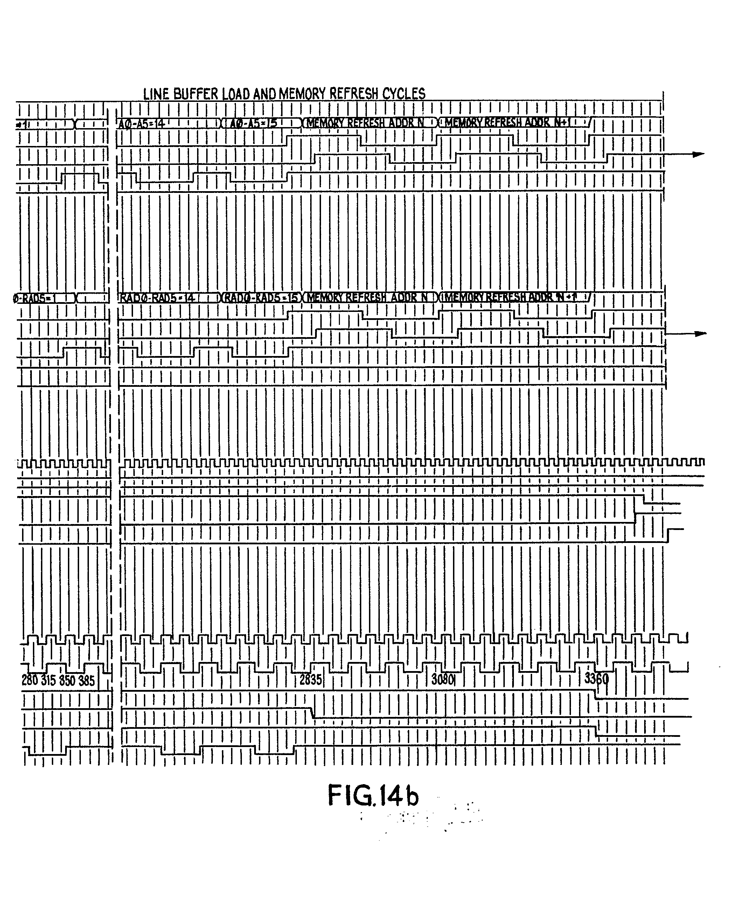

Fig 14a and 14b is a detailed timing diagram for the transfer of data from the various blocks in the scan converter of the system of figures 1 to 3 and 12.

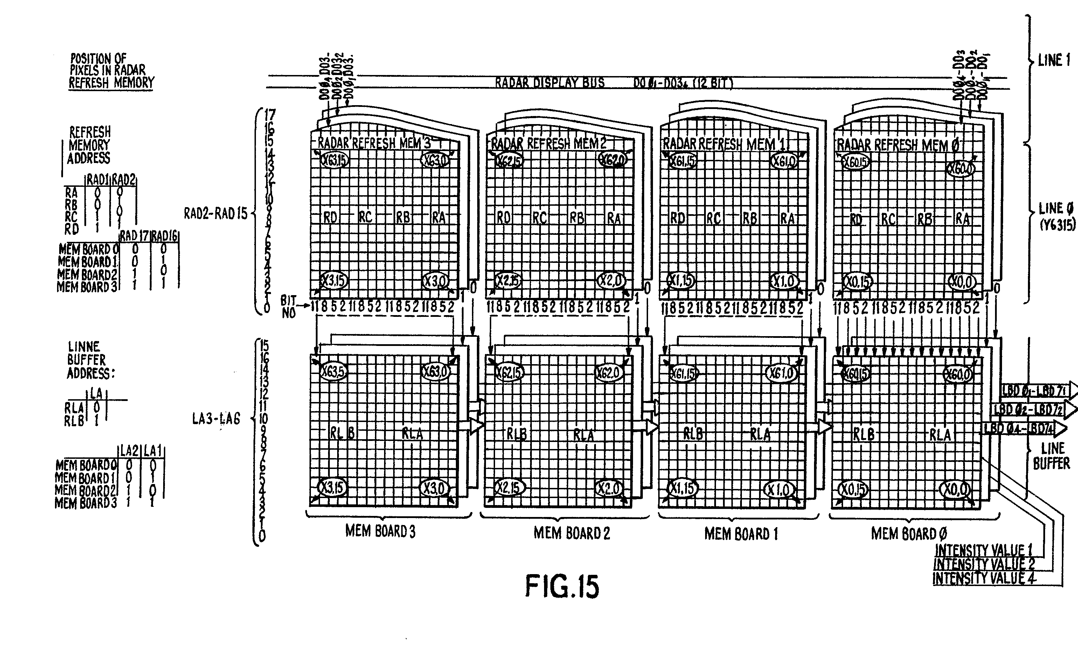

Fig 15 is a diagram illustrating the pixel positions in the radar display refresh memory of figure 12.

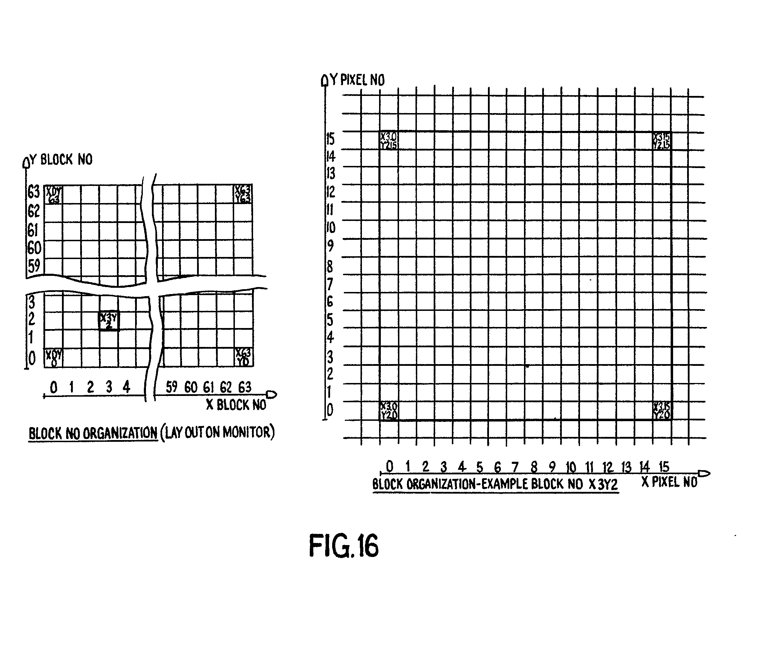

Fig. 16 illustrates the position of pixels on the raster scan display of the monitor of figure 12.

In Fig. 1. the function of a scan converter 1 is to transform picture data which has a specific scan format, namely polar coordinates related to a radar sensor, and a first data rate, into picture data of identical content, but having a different scan format, namely cartesian coordinates, and a second data rate, which is more convenient for the operator and which is to be displayed on a high resolution raster scan monitor 4. The scan converter 1, which forms a first part of the system illustrated in Fig. 1, converts radar data (video, sync and angular direction of the antenna) to X, Y-coordinates in a coordinate-converter unit 2, the converted radar information being stored in a radar display refresh memory 3 for appropriate display on the high resolution raster scan monitor 4 with a refresh rate of up to 60 Hz, the data stored in the radar display refresh memory 3 being transferred to the monitor 4 via a digital to analog converter and monitor sync generator 5.    Another part of the system illustrated in Fig. 1 is a synthetic part 6 containing several synthetic refresh memories 6a, 6b, 6c, the contents thereof being displayed on the monitor 4 and overlaying the radar picture.  The synthetic refresh memories are controlled from a bus system 7, to which a vector and ASCII code generator 8 is connected.  It is to be understood that the converted radar signals which are displayed on the monitor 4 can have their intensity and/or gray scale varied according to the settings made by the operator, and it is also to be understood that the operator or a control function may select between different modes of operation, for example the display of radar data only or the display of radar data onto which are superposed synthetic display functions such as continuous vectors, broken vectors, vector contours and broken vector contours etc, provided by the synthetic part 6 of the display system.  Vectors and characters can be generated in different synthetic picture memories for different colours and properties and the operator can also select various ranges of gain, range ring intensity, radar video on/off, clutter controls, off centering in X and Y direction, range scale selection and afterglow selection.

In Fig. 2 all the modules employed in the scan conversion process of the scan converter 1 are indicated, i.e. all the modules used in the process in which radar information is converted from polar coordinates to cartesian coordinates (or X-Y coordinates). It will be seen from figure 2 that the coordinate - converter unit 2 of figure 1 comprises four in/out-modules, namely a radar input module 9, an antenna input module 10, a video converter input 11, a video converter output 12 and a display processor module 13.   The radar input
module 9 carries out a single conditioning of the
signal in which the signal level is adapted in relation
to the signal to noise ratio.   The antenna input module
10 is substantially concerned with the conversion of
the synchronised antenna signal into digital bearing
in absolute angular format.   These modules are connected
in a direct or indirect manner to the radar display
refresh memory 3, which in Fig.2 is indicated by the
block 14.   The coordinate-converted radar picture is
stored in the refresh memory 3 prior to being displayed
on the raster scan monitor 4.

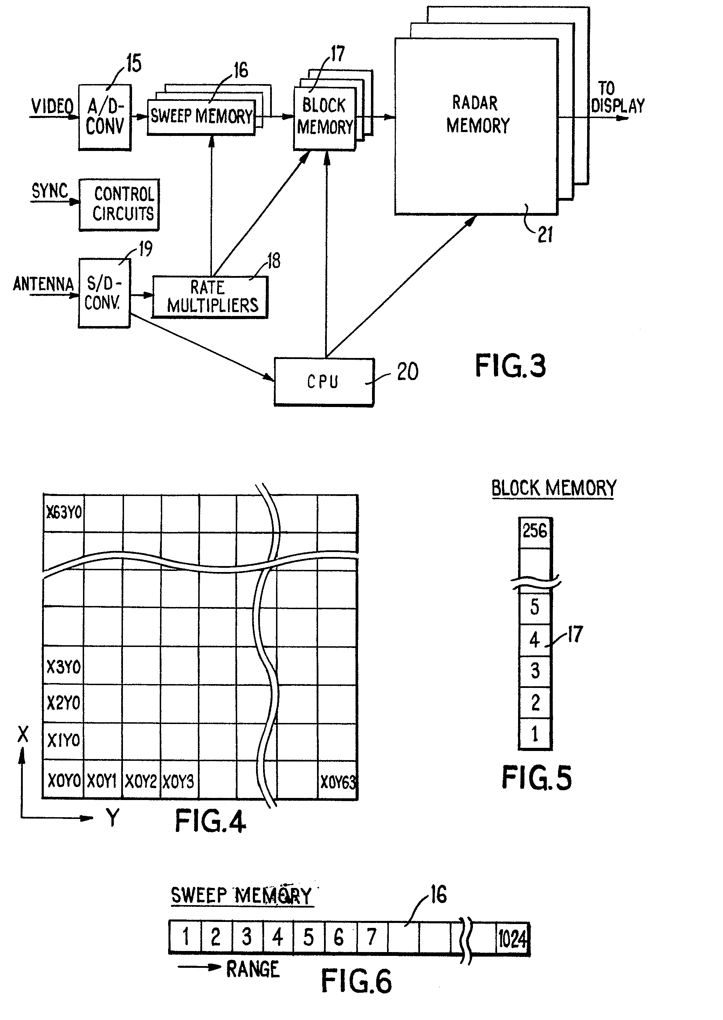

As illustrated in Fig. 3, the analog video signal
which is supplied by a radar antenna to an analog to
digital converter 15 is converted therein to a 3-bit
digital signal and thereafter stored in a sweep
memory 16.   From the sweep memory 16 the digital video
information is transferred to a block memory 17, which
is buffer storage provided by an intermediate storage
unit and will be further described below.   During the
transfer of the digital video information from the
sweep memory 16 to the block memory 17 conversion from
polar to cartesian coordinates is carried out the
conversion being realized by the use of rate multipliers
in a unit 18, which receive direction signals from the
antenna via a synchro-digital (S/D) converter 19 which
converts the raw antenna bearing signal ($\emptyset$) into

0068852

digital signals.           For example, three-phase
synchro phase information constituting the raw antenna
bearing signal is converted thereby into twelve-bit
parallel information.  Signals from this latter converter 19 are also supplied to a central processing
unit 20, which controls the block memory 17 for the
transfer of the cartesian data stored therein to a
radar memory 21, so as to transfer the block memory
data to the radar display memory addresses corresponding
to the cartesian coordinates associated with said
radar data and also coinciding with the raster format
of the monitor 4.

Fig. 3 illustrates the arrangement of the radar
display memory 21, the radar display memory being
arranged in 64 x 64 blocks, each block having 16 x 16
pixels or picture points.  This gives a total of
approximately one million picture points.

In Fig. 5 there is illustrated the arrangement
of the block memory 17.  It is a block structure
similar to the radar memory illustrated in Fig.4,
but has only 256 blocks in total.  With 16 x 16 pixels
in each block of the block memory 17 this gives a
total of approximately 65000 pixel points which can
be filled or emptied in the block memory 17.

Fig. 6 illustrates the build-up of the sweep memory
16 indicating 1024 range cells.  At 0.75, 1.5, 3, 6, 12,
24 and 48 nautical miles this range cell represents a distance of 6.25/2, 6.25, 12.6, 50,100 and 200 meters respectively, for an off-centred picture.

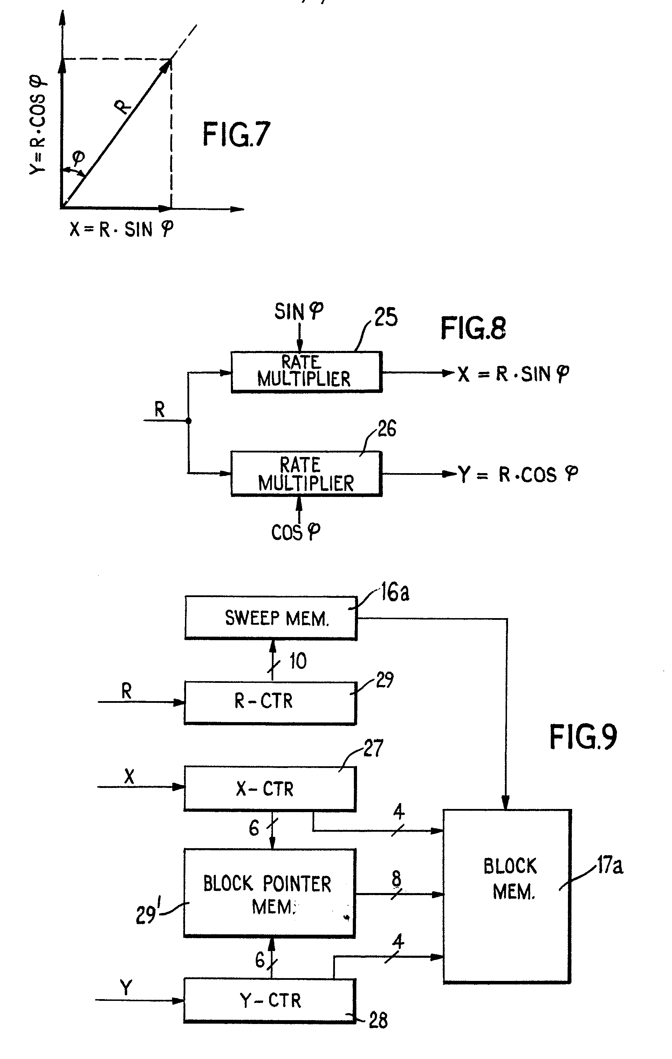

From Fig 7 which illustrates the connection between polar or vector coordinates and cartesian coordinate, it is seen that any point along a radar scan vector R ($\phi$) may be represented in the XY-plane by a pair of X and Y values. In the conversion process the vector R ($\phi$) is generated as a constant frequency, and its components X=R sin$\phi$ and Y=R COS $\phi$, are generated by the use of rate multipliers as indicated in Fig. 8. Here, the frequency representing R is supplied to a first rate multiplier 25 and a second rate multiplier 26, the first rate multiplier 25 having as a second input a sin $\phi$ value which may be fetched from a look-up table in a read-only memory ROM (shown in figure 11) which is part of the S/D converter 19. Thus, the output from the rate multiplier 25 will be the cartesian value X=R sin $\phi$, which is a frequency different from the input frequency representing the scan vector the output depending on the value of sin $\phi$ supplied from the look-up table. This frequency signal. is supplied to an X-counter 27 as illustrated in Fig. 9, which converts the frequency signal to a digital counter value pointing to the associated address in the block memory 17a and an associated block pointer memory 29'.

The second input to the rate multiplier 26 is the cos $\phi$ value obtained as the complement of the sine $\phi$ value from the ROM. Its output i.e. the frequency value Y=R cos $\phi$, is in a similar manner supplied to Y-counter 28, which converts the frequency signal into a digital signal pointing to the associated address in the block memory 17a and the block pointer memory 29' as will be further discussed in connection with Fig. 10.

As illustrated in Fig. 9, signals are transferred from the X-counter 27 and the Y-counter 28 to the block pointer memory 29', which during coordinate conversion presents pointers to the block memory 17a. Such pointers are also generated when blocks are transferred to the radar display memory 21, and in this case the addresses to block pointer memory are generated in the CPU 20 as illustrated in Fig 3.

The frequency representing the fundamental vector R is supplied to an R-counter 29 which points to addresses in the sweep memory 16a, which is also represented at 16 in Fig. 3.

As disclosed above, the block memory 17 which has previously been indicated in Fig. 3 and Fig 5. comprises 256 block elements each of which are divided into 16x16 pixels, thereby making a total of 65 536 pixel positions. Each of these pixel points can store a 3-bit information giving a total of 196,608 bits to be stored in the block memory 17.

In Fig. 10 it is schematically illustrated how the various blocks in the block memory 17 are arranged in relation to the writing sweep beam which represents the digitized radar video signals which are intermittently stored in the sweep memory 16 illustrated at 16b in Fig. 10. The block memory 17 is addressed in such a way that the sweep memory scanning area is always covered by some or all of the memory blocks included in the block memory 17. In Fig. 10 there is illustrated an example of a writing sweep beam 16b generated by the sweep memory 16, which passes through four blocks, namely blocks B1-B6 in the block memory 17b. It is seen that video at position A in the writing sweep beam 16b is written into block B2, pixel 10-3 in the X, Y-plane. It is also seen that the sweep beam has a notional bearing $\emptyset$ going through block B4, block B5, block B2 and block B3, the notional bearing corresponding to the actual bearing $\emptyset$ of the radar antenna. At a bearing $\emptyset \pm \Delta \emptyset$, the writing sweep beam would scan through other blocks and pixels. This notional scanning by the writing sweep beam is in fact effected by the manner in which the block memory 17 is addressed as data is written from the sweep memory 16 to the block memory 17 as will be explained in more detail herein-after. In Fig. 10 the writing sweep beam 16b has already scanned through block B1 and this block has therefore been "filled" with the necessary video data in converted scan format, and is now ready to be emptied, i.e. the information thereof transferred to the radar memory 21, see Fig. 3. When the writing sweep beam moves further it will come into the area covered by block B6, and block B6 must therefore be an "empty" block. If all the 256 blocks in the block memory are considered, it is seen that some blocks are empty, some occupied by the writing sweep beam, some being emptied and some being filled. It should also be noted that at start-up the pointer memory 29' is initialized with the correct pointers.

As explained above the block memory pixel locations which are covered by the writing sweep beam are filled with data representing raw radar video information in accordance with the cartesian coordinates associated therewith, and the memory blocks containing the pixel locations which are to be filled with information are so arranged as to be "displaceably" overlapped by the sweep beam through its scanning operation. In other words, the blocks which are in the process of being filled are maintained with an address corresponding to the actual antenna bearing interval, which makes these blocks stationary relative to the writing sweep beam whilst being covered by the same, whereas the blocks which have been passed by the writing sweep beam and are emptied, are displaced i.e. given another address so as to be "positioned" ahead of the writing sweep beam for thereby maintaining the overlapping thereof.

This overlapping of the blocks on the writing sweep beam is accomplished by the central processing unit 20 indicated in Fig.3, the processing unit 20 receiving bearing information from the antenna. This bearing information settles the address of each memory block, so as to correspond to a bearing interval in which the memory blocks are covered by the writing sweep beam. When the writing sweep beam has passed a memory block, which by then has been filled with appropriate data, the said data is transferred to the radar display memory 21 and the address of the emptied memory block is changed so that this block assumes a "ready" position in order to be covered again by the advancing writing sweep beam.

The total number of pixels per complete rotation of the radar beam is 4.096.000, the radar pulse repetition rate being 2000 per second. Since the beam rotates in small steps, some elementary areas scanned are irradiated several times during one complete rotation of the beam. All the raw digitized pixels are stored in the block memory 17, but only the final i.e. last pixel data which appears after the beam has passed any particular elementary area is transferred to the radar display refresh memory 3. The passing of the beam is monitored by an algorithm. Thus there are 4.096.000 writing accesses to the block memory 17, but only 1045876 "final" pixels are transferred to the refresh memory 3. No updating of the same pixel is effected in the refresh memory 3, and the 1045876 pixel locations of the refresh memory 3 correspond to the pixel points of the raster scan display on the monitor 4. In accordance with the algorithm, for every antenna bearing $\emptyset$ there exists a series of addresses of memory blocks which have been passed by the writing sweep beam 16b.

The algorithm also tests the angle and position of the
extreme points of every memory block, so as to determine
which blocks have been passed and are ready to be read
to the refresh memory 3.

At start-up the central processing unit 20 reads
off console-buttons for sweep-centre, range afterglow
intensity etc.  This information is transferred to the
in/out-modules 9 to 13 at initialization.  The CPU 20
will, as mentioned above, also generate a table in the
CPU-memory, which includes all memory block addresses
and the corresponding antenna bearings.  This table is
regenerated every time the sweep centre is moved.
In operation the CPU 20 receives an interrupt every ms.
When the interrupt is received the CPU 20 reads off the
antenna bearing.  The block addresses to all blocks
which the scan has passed are now  output to the video
converter output module 12.  These addresses are used
for transfer of block data from the block memory 17 to
the radar display memory 21.

In Fig. 11 there is shown a more detailed block
diagram of the video converter input module 11 indicated
previously in Fig. 2.  This module 11 has inter alia
circuits for A/D-conversion, interference filter, video
sample memory, sine-cosine circuits and XY-rate multipliers.  Necessary circuits for range rings, sample
select, sync filters and controls are also included.
The A/D-converter is used to digitize the video signal
into eight levels (3-bits), the gain of the converter
being a combination of sweep gain and preset gain, and
the sample frequency being preferably 24 MHz.  The
sampling frequency is dependent upon range scale setting,
and this is accomplished by adjusting the input sample
select circuit.  Details of the blocks 19 and 18 of Fig.3 are shown in Fig.11 between the legends ANT. SIGNALS and
X-CONTROL and Y-CONTROL.

At the beginning of every radar sweep, the bearing
information ($\emptyset$) is latched and used as input to a sine-
ROM.  From the bearing data a sine-value is obtained and
from the complement thereof a cosine-value is obtained.
Both values are stored.  The two most significant bits
of the bearing data are decoded for quadrant information.
These functions are accomplished by the sine-cosine
circuits indicated in Fig. 11.

The XY-rate multipliers 25 and 26 which have been
discussed above, are used to generate the X- and Y-
frequencies for coordinate conversion.  The sine of
the bearing value determines X-frequency in quadrants
1 and 3 and Y-frequency in quadrants 2 and 4, whereas
the cosine of bearing value determines X-frequency in
quadrants 2 and 4 and Y-frequency in quadrants 1 and
3.    Both frequencies vary between 0 and 2 MHz.

Since maximum read-frequency in sample memories
is preferably 4MHz and maximum XY-frequencies are 2
MHz, it is sometimes during conversion necessary to
combine two video cells, i.e. select the biggest of
two video values.  This is done in the output sample
circuit.

The sync filter circuit has two sync filters, one
filter being preset to enable a converter-sync every
0.5 ms, and the other being preset to enable a CPU-sync
(sync interrupt) every 1 ms.  This means that the converter will skip all sync exceeding 2 KHz.  The enabled
sync is synchronized to a 24 MHz clock for data acquisition and to 12 MHz for sine, cosine generation and conversion.

The module 11 has also circuits for range selection and interface to latch data from a selected bus plane.

The basic timing of the above described system is obtained from the synchronization of the monitor 4. Information contained in the different refresh memories of which one is the radar display refresh memory 3, has to be transferred by the video output unit 5 to the monitor 4 according to what the monitor raster position is at the moment. In this connection reference is made particularly to Fig. 12 and Fig 13, Fig. 12 being a block diagram illustrating the data flow from the coordinate converter unit 2 through the refresh memories 3, 6a-6c and via auxiliary buffers to the monitor 4, and Fig 13 illustrating the monitor timing.

In Fig. 13 the following designations indicated therein represent:

tha = total active horizontal line time

thb = horizontal blanking time

tvb = vertical blanking time.

During the time interval _tha_ which represents the total active horizontal line time, pixels for the actual line are shifted from a line buffer 30, 60a, 60b, 60c to the monitor 4 see Fig. 12. At the same time the refresh memories 3 and 6a, b and c are ready for external inputs of display data.

During the time interval _thb_ which represents the horizontal blanking time, all pixels (up to 1024) for the next line are loaded from the refresh memories to the respective line buffers. During the time when the line buffers are being loaded, the refresh memories go busy for external inputs.

In other words the radar data representing a picture line of the monitor, on which the converted radar data is to be displayed, is transferred to a line buffer during the horizontal blanking time or flyback period of the monitor 4, and this flyback period is very short compared to the total active horizontal line time.

The use of a line buffer after the refresh memory allows a rapid transfer of line data during this period because the line data only represents a small quantity of the information stored in the refresh memory. For further speeding up of the transfer of data from the refresh memory to the line buffer the data is transferred in groups, each group being selected so as to have the same row address thereby reducing the access time to each address location by reading the data in page mode and speeding up retrieval and transfer time during the flyback period. Page mode reading can be carried out by using for example Intel Memory 2118 elements.

A selection and timing means for accomplishing the above described transfer of data between the refresh memories and line buffers is indicated by block 31 . inscribed REFRESH TIMING in Fig. 12.

A detailed timing diagram is illustrated in Fig. 14a and 14b. The principle of the page mode operation can be seen for example from the second group of timing diagrams in Figures 14a and 14b, in which RADO-RAD17 represent address information, R RAS (L) represent Row Address Control Signal (Low), RERAS (H) represent Enable Row address (High), R CAS (L) represent Column Address Signal (Low), EDO (L) represent Enable Data out (Low) and RWE (L) represent Write Enable (L).

As seen from these diagrams the signal RERAS (H) shifts only once during a line buffer period, whereas RCAS (L) shifts 16 times during the same period.

Fig. 15 is a schematic diagram illustrating the pixel positions in the refresh memory, and Fig. 16 illustrates the position of the pixels on the monitor.

It is to be noted that when the pixels are transferred to the radar display refresh memory they will be stored at locations which correspond to "similar" location in the pixel position of the monitor. This facilitates the transfer of monitor line data from the refresh memory to the line buffer and thence to the monitor via the video output unit illustrated in Fig. 2.

With regard to the operations of transfer of data from the sweep memory 16 through the block memory 17 to the radar display refresh memory 3, it should be noted that these operations are performed entirely under the control of the central processor unit 20 and constitute two, software implemented tasks. In the first of these tasks, which of the blocks of 16 x 16 pixels have just been passed by the radar antenna beam for each of the 4096 possible values of antenna bearing $\emptyset$, the S/D converter 19 providing 12 bit resolution, is calculated geometrically according to the position of the sweep center of the radar on the display. The results of this calculation are stored sequentially in a data table, each antenna bearing with the associated block addresses. Each block in the display is listed once in this table, corresponding to one transfer per antenna rotation. The manner in which the limited number of physical memory blocks in the block memory 17 is to be utilized in each antenna rotation is planned, so that the block memory 17 can cover the whole display by using each physical memory block several times. The result of this computation is stored in the block pointer memory 29. In the second of the two tasks, the central processor 20 reads the antenna bearing every millisecond and, from a simple look-up in the table of bearings with associated block addresses mentioned above, initiates the transferring of the correct data block or blocks. It should be noted that the number of transfers to be initiated will vary from 0 to a maximum of 64. Each block, as mentioned before, holds 16 x 16 pixels. The transferring of a single block is effected by a continuous sequence of transfer cycles, 4 pixels at a time, giving 64 cycles as the total for one block. The following physical connections are used for the transfer from the block memory 17 to the radar display refresh memory 3:

twelve data lines to transfer 4 pixels of 3 bits;

eighteen address lines to address one 4-pixel group out of 262144; and

five control lines.

The control circuitry for the control operation is part of the physical equipment implementing the block memory 17.

0068852

- 25 -

<u>CLAIMS</u>

1. A method of treating range and direction information data which is converted from first scan format to a different scan format and is displayed on a raster scan display, wherein the range and direction information data provided by a range and direction sensor is stored in an input buffer as quantized video signals at addresses corresponding to the first format according to which the field of view, determined by the sensor in azimuth and range coordinates, is scanned at a given first rate, and addresses are generated as a function of the scan pattern and the scanning rate to accommodate the data read from the input buffer in a memory unit at locations corresponding to the display line pattern to be realized on the raster scan display, the data stored in the memory unit being transferred to a video output unit under the control of a timing unit so as to be presented on the raster scan display at a given second rate,

c h a r a c t e r i z e d  i n  that the storing of the data having converted addresses (X,Y) takes place in an intermediate storage unit (17) consisting of a number of square memory blocks (B1 B2) each corresponding to a plurality of pixels,

that the intermediately stored data in the said blocks is transferred to a display memory (21) which comprises at least a sensor information refresh memory, after a writing sweep has passed respective memory blocks, and that in the said transfer of data to the display memory a plurality of pixels are transferred in parallel.

2. A method as claimed in claim 1, c h a r a c - t e r i z e d  i n  that a writing sweep beam in effect sweeps across a region of the intermediate storage corresponding to the area being scanned by the sensor so as to simultaneously cover a number of memory blocks
and consequently a number of pixel locations associated
therewith and that the pixel locations which are covered
by the writing sweep beam are filled thereby with data
representing raw video information, the memory blocks
containing the said filled pixel locations being
arranged to displaceably overlap the writing sweep beam
through its operation, and the memory blocks which are
in the process of being filled being maintained
stationary relative to the writing sweep beam whereas
the blocks which have been passed by the writing sweep
beam are emptied to the said refresh memory and displaced
to a position ahead of the writing sweep beam so as to
maintain the overlapping thereof.

3.      A method as claimed in claim 1, c h a r a c t-
e r i z e d   i n   that the number of memory blocks of
the intermediate storage unit is large enough for all
writing positions of the writing sweep beam to be
covered thereby.

4.      A method as claimed in claim 1, c h a r a c -
t e r i z e d   i n   that the said quantized video signals
are stored in a sweep memory from which the video information is transferred to the intermediate storage
unit, a conversion from the first scan format to the
second scan format being performed during said transfer
and implemented by rate multipliers.

5.      A method as claimed in claim 4, c h a r a c -
t e r i z e d   i n that the conversion from polar
coordinates to cartesian coordinates by rate multipliers
is accomplished by representing a range and direction
vector associated with the sensor by a constant
frequency, and generating its cartesian components X and Y
as fractions of the said frequency by means of the rate
multipliers, the fractions representing the corresponding sine and cosine values, respectively which are read from a read-only-memory table.

6. A method as claimed in claim 5, c h a r a c - t e r i z e d  i n  that the three frequencies (R,X,Y) are supplied respectively to a vector counter pointing to addresses in the sweep memory, and an X counter and a Y counter pointing to addresses in a block memory and a block pointer memory constituted by the intermediate storage unit.

7. A method as claimed in claim 6, c h a r a c - t e r i z e d  i n  that the data representing a picture line which is to be displayed on a raster scan monitor, is transferred from the refresh memory to a line buffer during the line flyback period of the display beam of the monitor and that during the total active horizontal line time of the monitor the pixels for the actual line are shifted from the line buffer to the monitor, the refresh memory during the horizontal line time being enabled for external input of fresh data which is to be displayed on the monitor.

8. A method as claimed in claim 7, c h a r a c - t e r i z e d  i n  that data from the refresh memory to the line buffer is transferred in groups, each group being selected so as to have the same row address so as thereby to reduce the access time to each address location by reading data in page mode and speeding up retrieval time and transfer time during the line flyback period.

9. Apparatus for carrying out a method for treating range and direction information data which is converted from a first scan format to a different scan format and is displayed on a raster scan display, as claimed in claim 1, c h a r a c t e r i z e d  i n  that the apparatus comprises an intermediate storage unit (17) for storing the range and direction data having converted addresses (X, Y) and consisting of a number of square memory blocks (B1,B2) each corresponding to a plurality of pixels, the intermediate storage unit (17) being adapted to transfer the intermediately stored data in the said blocks (B1, B2) to a display memory (21) which comprises at least a sensor information refresh memory (3), after a writing sweep has passed respective blocks, a plurality of pixels being transferred in parallel in the said transfer of data.

10. Apparatus as claimed in claim 9, c h a r a c - t e r i z e d i n that the intermediate storage unit comprises a dynamic block memory (17) the memory blocks of which are so controlled as to overlap a writing sweep beam (16b) through its writing operation, so that memory blocks (B4, B5, B2, B3) which are in the process of being filled with data are maintained with the same address location relative to the writing sweep beam (16b) for the covering thereof, whereas the blocks (B1) which have been passed by the writing sweep beam are emptied to the said refresh memory and given another address so as to simulate a displacement to a position (B6) ahead of the writing sweep beam (16b), so as to maintain the overlapping thereof.

11. Apparatus as claimed in claim 9, c h a r a c - t e r i z e d i n that the number of memory blocks in the intermediate storage unit is large enough to cover all writing positions of the writing sweep beam.

12. Apparatus as claimed in claim 9, c h a r a c - t e r i z e d i n that rate multipliers (25,26) are n provided for converting the coordinates of the quantized video data when the quantized video data is transferred by a sweep memory (16) to a block memory (17) constituted by the intermediate storage unit.

13. Apparatus as claimed in claim 12, c h a r a c - t e r i z e d  i n  that means are provided for generating a constant frequency representing a range and direction vector associated with the sensor, the said constant frequency being supplied as an input to the rate multipliers and the frequencies outputted from the rate multipliers (25, 26) being applied to drive respective counters, (27, 28), which point to addresses in the block memory (17), the constant frequency representing the vector also being applied to drive a specific counter (29) which through the sweep memory (16) is connected to the block memory (17).

14. Apparatus as claimed in claim 13, c h a r a c - t e r i z e d  i n  that the display memory (21) includes a line buffer (30) which receives from the said refresh memory (3) data representing a picture line of a monitor (4) on which the converted range and direction data is to be displayed, transfer of the said picture line data being effected during the line flyback period (thb) of the display beam of the monitor (4).

15. Apparatus as claimed in claim 14, c h a r a c - t e r i z e d  i n  that a selection means (31) is connected to the refresh memory (3) and the line buffer (30) to control transfer of data from the refresh memory (3) to the line buffer (30) in groups, each group being selected so as to have the same row address, thereby to reduce the access time to each address location by reading the data in page mode and speeding up retrieval and transfer time during the said line flyback period.

KS 800 SYSTEM BUS

SCAN CONV.

(SYNTHETIC)

| SCAN-CONVERTER | REFRESH MEMORY (RADAR) | REFRESH MEMORY (SYNTHETIC) | REFRESH MEMORY 2 (SYNTHETIC) | REFRESH MEMORY 1 (SYNTHETIC) | VECTOR AND ASC II GEN 0 |

RADAR INPUT

D/A CONV AND CRT SYNC GENERATOR

CRT

**FIG.1**

ST-80 BUS

| RADAR INPUT 2E-506 | ANTENNA INPUT 2E-507 | VIDEO CONV. INPUT 2E-509 | VIDEO CONV. OUTPUT 2E-508 | DISPLAY SYSTEM RADAR MEM. ETC. | DISPLAY PROCESSOR 2E-501 |

SYNC
VIDEO
BEARING

**FIG.2**

0068852

FIG.3

FIG.4

BLOCK MEMORY

FIG.5

SWEEP MEMORY

RANGE

FIG.6

$Y = R \cdot COS \, \varphi$

$R$

$\varphi$

$X = R \cdot SIN \, \varphi$

**FIG.7**

---

$SIN \, \varphi$

| RATE MULTIPLIER | 25 |

$\longrightarrow X = R \cdot SIN \, \varphi$

$R$

| RATE MULTIPLIER | 26 |

$\longrightarrow Y = R \cdot COS \, \varphi$

$COS \, \varphi$

**FIG.8**

---

| SWEEP MEM. | 16a |

10

$R \longrightarrow$ | R - CTR | 29 |

$X \longrightarrow$ | X - CTR | 27 |

6

4

| BLOCK POINTER MEM. | 29' |

8

| BLOCK MEM. | 17a |

6

4

$Y \longrightarrow$ | Y - CTR | 28 |

**FIG.9**

FIG.10

FIG.11

FROM SYSTEM BUS

12 BIT DATA (4 PIXELS X 3 BIT)

16 BIT DATA (16 PIXELS X 1 BIT)

SCAN-CONVERTER LOGIC

REFRESH MEMORY RADAR 1M BITS X 3

3

REFRESH MEMORY SYNTHETIC 1M BITS X 1

6a

REFRESH MEMORY SYNTHETIC 1M BITS X 1

6b

REFRESH MEMORY SYNTHETIC 1M BITS X 1

6c

SYNTHETIC MEMORY CONTROL

2

RADAR INPUT

64 BITS X 3

64 BITS X 1

64 BITS X 1

64 BITS X 1

LINE BUFFER 1K BITS X 3

LINE BUFFER 1K BITS X 1

60a

LINE BUFFER 1K BITS X 1

60b

LINE BUFFER 1K BITS X 1

60c

30

8 BITS X 3

8 BITS X 1

8 BITS X 1

8 BITS X 1

4

MONITOR

REFRESH TIMING

VIDEO OUTPUT

5

VIDEO AND SYNC

31

FIG.12

FIG.13

tha    thb    tha    tha    thb    tha    tvb

t'

FIG.14a

LINE BUFFER LOAD AND MEMORY REFRESH CYCLES

A0-A5=14 ⟩⟨ A0-A5=15 ⟩⟨MEMORY REFRESH ADDR N ⟩⟨MEMORY REFRESH ADDR N+1

0-RAD5=1 ⟩⟨ RAD0-RAD5=14 ⟩⟨RAD0-RAD5=15⟩⟨MEMORY REFRESH ADDR N ⟩⟨MEMORY REFRESH ADDR N+1

280 315 350 385    2835    3080    3360

FIG.14b

FIG.15

BLOCK NO ORGANIZATION (LAY OUT ON MONITOR)

BLOCK ORGANIZATION-EXAMPLE BLOCK NO X3Y2     X PIXEL NO

FIG.16